# EUROPÄISCHE PATENTSCHRIFT

(11) **EP 2 028 381 B1**
(45) Veröffentlichungstag und Bekanntmachung des Hinweises auf die Patenterteilung: **22.12.2010**
(21) Anmeldenummer: 08161881.1
(22) Anmeldetag: 06.08.2008
(51) Int. Cl.: F16D 13/58, F16D 13/71

(54) **Reibungskupplung, insbesondere für den Antriebsstrang eines Fahrzeugs**
Friction coupling, in particular for the drive of a vehicle
Embrayage à friction, en particulier pour le conducteur de commande d'un véhicule

(30) Priorität: 20.08.2007 DE 102007039225; 31.07.2008 DE 102008040887
(43) Veröffentlichungstag der Anmeldung: 25.02.2009
(73) Patentinhaber: ZF Friedrichshafen AG, 88038 Friedrichshafen (DE)
(72) Erfinder: Weidinger, Reinhold, 97509, Kolitzheim (DE); Lindner, Joachim, 97456, Dittelbrunn-Hambach (DE)

(56) Entgegenhaltungen:
- DE-A1- 19 513 454
- FR-A- 2 742 499
- GB-A- 2 142 100

## Beschreibung

Die vorliegende Erfindung betrifft eine Reibungskupplung, insbesondere für den Antriebsstrang eines Fahrzeugs, umfassend eine mit einem Antriebsorgan zur gemeinsamen Drehung um eine Drehachse zu koppelnde Schwungmasse, welche eine erste Reibfläche bereitstellt, ein Gehäuse, welches in seinem radial äußeren Bereich an der Schwungsmasse festgelegt ist, eine Anpressplatte, welche eine zweite Reibfläche bereitstellt und vermittels einer Mehrzahl von Kopplungseinheiten mit dem Gehäuse zur gemeinsamen Drehung um die Drehachse und bezüglich des Gehäuses axial bewegbar gekoppelt ist, eine Kraftbeaufschlagungsanordnung, welche bezüglich des scheibenartigen Gehäuses und der Anpressplatte abgestüzt ist zur Beaufschlagung der Anpressplatte in Richtung auf die Schwungmasse zu, wobei das Gehäuse durch eine Mehrzahl von in die Schwungmasse eingreifenden Befestigungsbolzen an dieser festgelegt ist.

Aus der DE 195 13 454 A1 ist eine Reibungskupplung bekannt, bei welcher die Schwungmasse im Wesentlichen topfartig ausgebildet ist mit einem Bodenbereich und einem Wandungsbereich. An einer Stirnseite des Wandungsbereichs, das im Wesentlichen scheibenartig ausgebildete Gehäuse axial an. Die Befestigungsbolzen, welche das Gehäuse an der Schwungmasse arretieren, beaufschlagen mit ihren Köpfen die von der Schwungmasse abgewandt liegende Seite des im Allgemeinen aus Blechmaterial gefertigten Gehäuses. Da dieses Blechmaterial auch zum Bereitstellen der Möglichkeit, das Gehäuse durch plastische Verformung in die gewünschte Form zu bringen, vergleichsweise weich ist, besteht die Gefahr, dass durch zu feste Beaufschlagung durch die Köpfe der Befestigungsbolzen Verformungen des Gehäuses generiert werden. Auch aus der FR 2 742 499 ist eine Reibungskupplung bekannt. Es ist die Aufgabe der vorliegenden Erfindung, eine Reibungskupplung, insbesondere für den Antriebsstrang eines Fahrzeugs vorzusehen, bei welcher die Gefahr einer Verformung im Bereich des Gehäuses durch die Wechselwirkung mit Befestigungsbolzen praktisch nicht besteht.

Erfindungsgemäß wird diese Aufgabe gelöst durch eine Reibungskupplung, insbesondere für den Antriebsstrang eines Fahrzeugs, umfassend eine mit einem Antriebsorgan zur gemeinsamen Drehung um eine Drehachse zu koppelnde Schwungmasse, welche eine erste Reibfläche bereitstellt, ein Gehäuse, welches in seinem radial äußeren Bereich an der Schwungsmasse festgelegt ist, eine Anpressplatte, welche eine zweite Reibfläche bereitstellt und vermittels einer Mehrzahl von Kopplungseinheiten mit dem Gehäuse zur gemeinsamen Drehung um die Drehachse und bezüglich des Gehäuses axial bewegbar gekoppelt ist, eine Kraftbeaufschlagungsanordnung, welche bezüglich des scheibenartigen Gehäuses und der Anpressplatte abgestüzt ist zur Beaufschlagung der Anpressplatte in Richtung auf die Schwungmasse zu, wobei das Gehäuse durch eine Mehrzahl von in die Schwungmasse eingreifenden Befestigungsbolzen an dieser festgelegt ist und wobei an einer von der Schwungmasse abgewandten Seite des Gehäuses dort, wo Befestigungsbolzen vorgesehen sind, eine größere Materialhärte für die Beaufschlagung durch die Befestigungsbolzen bereitgestellt ist, als in anderen Bereichen des Gehäuses.

Da in denjenigen Bereichen, in welchen die Befestigungsbolzen also in Wechselwirkung mit dem Gehäuse treten, eine größere Materialhärte vorhanden ist, ist die Gefahr einer Verformung und damit die Gefahr undefinierter Befestigungszustände vermieden.

Die größere Materialhärte kann beispielsweise dadurch bereitgestellt werden, dass das Gehäuse dort, wo die Befestigungsbolzen dieses beaufschlagen, mit größerer Materialhärte ausgebildet ist, als in anderen Bereichen.

Alternativ ist es möglich, dass in Zuordnung zu den Befestigungsbolzen Unterlegeelemente vorgesehen sind, die bezüglich des Materials des Gehäuses eine größere Materialhärte aufweisen.

Um das Gehäuse mit dem bzw. den Befestigungbolzen zu einer Einheit zusammenfassen zu können, ohne zusätzliche Bauteile zu benötigen, wird vorgeschlagen, dass die Unterlegeelemente an dem Gehäuse durch Befestigungselemente festgelegt sind, vermittels welchen die Kopplungseinheiten bezüglich des Gehäuses festgelegt sind.

Wenn in Zuordnung zu mehreren Befestigungsbolzen ein Unterlegeelement vorgesehen ist, kann die Anzahl an Bauteilen gering gehalten werden. Wenn weiterhin die Unterlegeelemente nach radial außen nicht über die Befestigungsbolzen, insbesondere deren Köpfe, hervorstehen, wird die Beanspruchung zusätzlichen radialen Bauraums durch die Unterlegeelemente vermieden.

Die Kopplungseinheiten können beispielsweise wenigstens eine Blattfeder umfassen.

Weiter kann die Kraftbeaufschlagungsanordnung eine Membranfeder umfassen.

Die Ausgestaltung der Reibungskupplung kann derart sein, dass die Kraftbeaufschlagungsanordnung in ihrem radial äußeren Bereich bezüglich des Gehäuses und radial weiter innen bezüglich der Anpressplatte abgestützt ist. Selbstverständlich ist es auch möglich, diese Reibungskupplung nicht von dem gezogenen Typ, sondern vom gedrückten Typ auszugestalten, also die Anpressplatte radial weiter außen zu beaufschlagen, als die Abstützung am Gehäuse erfolgt.

Zur Erlangung einer sehr effizienten radialen Bauraumausnutzung wird weiter vorgeschlagen, dass die Schwungmasse im Wesentlichen topfartig ausgebildet ist mit einem die erste Reibfläche bereitstellenden Bodenbereich und einem radial außen vom Bodenbereich im Wesentlichen axial sich erstreckenden Wandungsbereich, wobei das Gehäuse scheibenartig ausgebildet ist und bezüglich einer Stirnseite des Wandungsbereichs abgestützt und daran festgelegt ist.

Dabei können im Wandungsbereich Aussparungen für die Kopplungseinheiten gebildet sein, so dass auch hierfür nicht zusätzlicher Bauraum in Anspruch genommen werden muss.

Im Wandungsbereich können weiterhin dort, wo Befestigungsbolzen vorgesehen sind, axial offene Aussparungen vorgesehen sein.

Um Verformungen des Gehäuses durch mangelnde Unterstützung vermittels des Wandungsbereichs zu vermeiden, wird weiter vorgeschlagen, dass wenigstens ein Unterlegeelement wenigstens eine Aussparung in Umfangsrichtung überbrückt.

Die vorliegende Erfindung wird nachfolgend mit Bezug auf die beiliegenden Figuren detailliert beschrieben. Es zeigt:
- Fig. 1: eine Teil-Axialansicht einer Reibungskupplung;
- Fig. 2: eine Schnittansicht der Reibungskupplung der Fig. 1, geschnitten längs einer Linie II - II in Fig. 1;
- Fig. 3: eine eine Schnittansicht der Reibungskupplung der Fig. 1, geschnitten längs einer Linie III - III in Fig. 1;
- Fig. 4: eine Schnittansicht der Reibungskupplung der Fig. 1, geschnitten längs einer Linie IV - IV in Fig. 1;
- Fig. 5: eine Schnittansicht der Reibungskupplung der Fig. 1, geschnitten längs einer Linie V - V in Fig. 1;
- Fig. 6: eine Ansicht der Reibungskupplung der Fig. 1 in Blickrichtung VI in Fig. 1;
- Fig. 7: eine weitere Teil-Axialansicht einer Reibungskupplung;
- Fig. 8: eine Schnittansicht der in Fig. 7 dargestellten Reibungskupplung, geschnitten längs einer Linie VIII - VIII in Fig. 7;
- Fig. 9: eine Schnittansicht der in Fig. 7 dargestellten Reibungskupplung, geschnitten längs einer Linie IX - IX in Fig. 7;
- Fig. 10: eine Schnittansicht der in Fig. 7 dargestellten Reibungskupplung, geschnitten längs einer Linie X - X in Fig. 7;
- Fig. 11: eine Schnittansicht der in Fig. 7 dargestellten Reibungskupplung, geschnitten längs einer Linie XI - XI in Fig. 7.

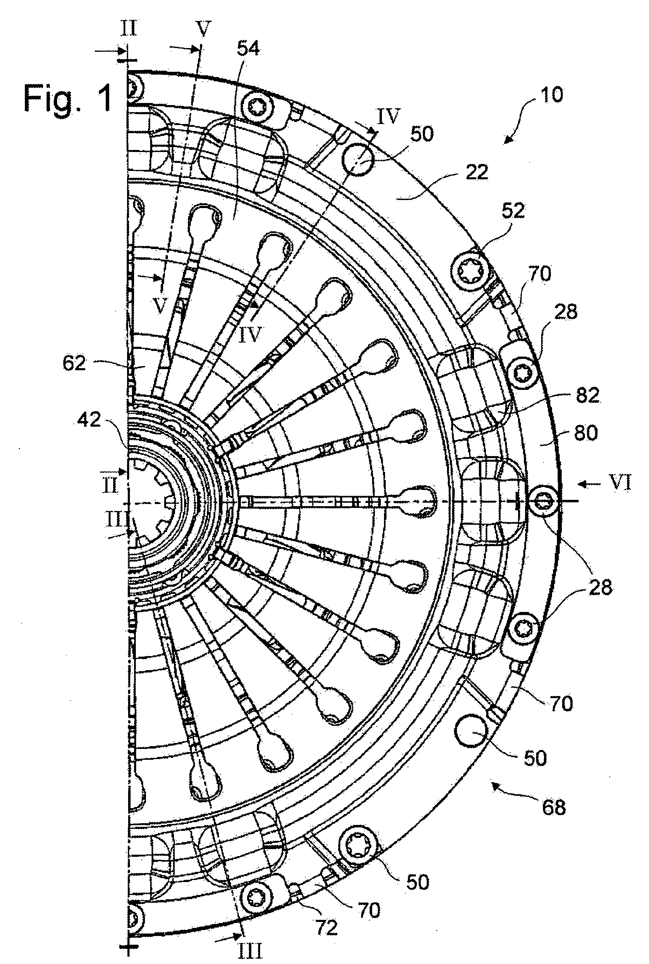

Die Fig. 1 bis 6 zeigen eine erste Ausgestaltungsform einer Reibungskupplung 10, mit welcher im Antriebsstrang eines Kraftfahrzeugs ein Drehmoment von einem Antriebsorgan, also beispielsweise einer Kurbelwelle einer Brennkraftmaschine, in einen Antriebsstrang weitergeleitet werden kann, beispielsweise auf die Eingangswelle eines Getriebes übertragen werden kann. Die Reibungskupplung 10 umfasst ein im Wesentlichen mit topfartiger Gestalt ausgebildetes und als Schwungmasse wirksames Schwungrad 12. Dieses Schwungrad 12 umfasst einen im Wesentlichen scheibenartigen Bodenbereich 14, der radial innen durch eine Mehrzahl von Schraubbolzen 16 an ein um eine Drehachse A drehbares Anrtriebsorgan, also beispielsweise eine Kurbelwelle, angeschraubt werden kann. In seinem radial äußeren Bereich trägt der Bodenbereich 14 einen Anlasserzahnkranz 18. Ferner geht dort ein integral mit dem Bodenbereich ausgebildeter Wandungsbereich 20 vom Bodenbereich 14 ab. Das Schwungrad 12 kann beispielsweise in einem Gussverfahren aus Metall hergestellt werden.

Die Reibungskupplung 10 umfasst ferner ein hier im Wesentlichen scheibenartig ausgebildetes Gehäuse 22. In seinem radial äußeren Bereich 24 liegt dieses Gehäuse 22 an einer Stirnseite 26 des Wandungsbereichs 20 an und ist, wie im Folgenden dargelegt, durch eine Mehrzahl von Befestigungsbolzen, beispielsweise Schraubbolzen 28, am Schwungrad 12 festgelegt.

In dem von dem Schwungrad 12 und dem Gehäuse 22 umschlossenen Raumbereich ist eine Anpressplatte 30 angeordnet. Die Anpressplatte 30 liegt mit einer Reibfläche 32 einer Reibfläche 34 des Schwungrads 12 axial gegenüber. Zwischen diesen beiden Reibflächen 32 und 34 sind die Reibbeläge 36 einer allgemein mit 38 bezeichneten Kupplungsscheibe klemmbar. Diese Reibbeläge 36 sind über einen Torsionsschwingungsdämpfer 40 mit einem Nabenbereich 42 der Kupplungsscheibe 38 gekoppelt. Dieser Nabenbereich 42 kann mit einer Getriebeeingangswelle zur gemeinsamen Drehung gekoppelt werden.

Ein als Kraftbeaufschlagungsanordnung wirksamer Kraftspeicher 54 ist in seinem radial äußeren Endbereich 56 über einen Drahtring 58 oder dergleichen am Gehäuse 22 abgestützt und beaufschlagt weiter radial innen in einem oder mehreren Schneidenbereichen 60 die Anpressplatte 30. Radial innen kann an dem beispielsweise als Membranfeder mit im Allgemeinen ebener Struktur ausgebildeten Kraftspeicher 54 im Bereich von Federzungen 62 desselben ein Ausrückermechanismus 64 ziehend angreifen, um durch Ziehen der Federzungen 62 in Richtung von dem Schwungrad 14 weg die durch den Kraftspeicher 54 auf die Anpressplatte 43 ausgeübte Belastung zu mindern oder aufzuheben. Die in den Fig. gezeigte Kupplung ist also grundsätzlich von dem gezogenen Typ.

Die Anpressplatte 30 ist im Bereich nach radial außen vorstehender Kopplungsvorsprünge 44, die vorzugsweise mit gleichem Umfangsabstand um die Drehachse A herum verteilt angeordnet sind, über mehrere Kopplungseinheiten 46 mit dem Gehäuse 22 ebenfalls in dessen radial äußerem Bereich 24 fest verbunden. Die Kopplungseinheiten 46 umfassen beispielsweise jeweils zwei gestapelt angeordnete und näherungsweise in Umfangsrichtung sich erstreckende Blattfedern 48, die in einem ihrer Umfangsendbereiche beispielsweise über einen Nietbolzen 50 am radial äußeren Bereich 24 des Gehäuses 22 festgelegt sind. In ihrem anderen Endbereich sind die Kopplungseinheiten 46 bzw. Blattfedern 48 jeweils durch einen in der Fig. 1 erkennbaren Schraubbolzen 52 an einem zugeordneten der Kopplungsvorsprünge 44 festgelegt.

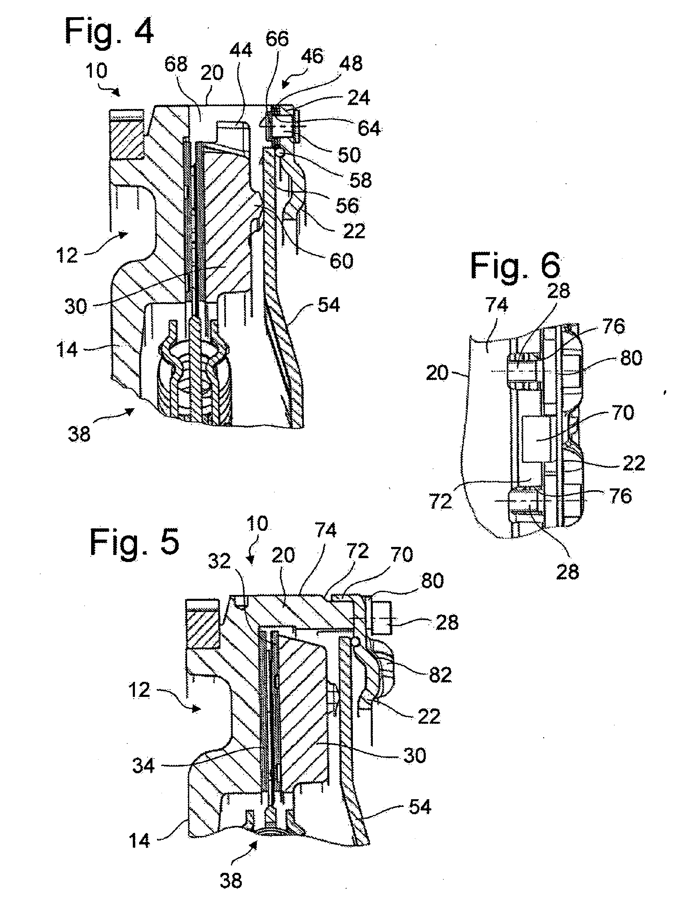

In seinem radial äußeren, also radial außerhalb des radial äußeren Bereichs 56 des Kraftspeichers 54 liegenden Bereich 24 stellt das Gehäuse 22 in Zuordnung zu den Kopplungseinheiten 46 jeweils Anlageflächenbereiche 64 bereit, in welchen die Kopplungseinheiten 46 über die Nietbolzen 50 an dem Gehäuse 22 festgelegt sind und an diesem festliegen. Wie man insbesondere in Fig. 4 erkennt, sind diese Anlageflächenbereiche 64 bezüglich des radial äußeren Bereichs 56 des Kraftspeichers 54 so angeordnet, dass keine axiale Überdeckung besteht. Insbesondere die beiden Blattfedern 48 einer jeweiligen Kopplungseinheit 46 sich im Wesentlichen nicht axial überlappen mit dem radial äußeren Bereich 56 des Kraftspeichers 54. Zusammen mit den Endbereichen der Blattfedern 48 ist durch einen jeweiligen Nietbolzen 50 eine Einlegescheibe 66 festgelegt, die sich jedoch mit dem radial äußeren Bereich 56 des Kraftspeichers 54 axial überlappt. Die Gesamtheit der über den Umfang verteilt liegenden Einlegescheiben 66 bildet eine Zetrierformation für den Kraftspeicher 54, so dass dieser in der Reibungskupplung 10 bzw. bezüglich des Gehäuses 22 und auch der Anpressplatte 30 zentriert gehalten ist. Hier kann ein geringfügiger Abstand zwischen den Einlegescheiben 66 und dem radial äußeren Bereich 56 des Kraftspeichers 54 bestehen, so dass grundsätzlich hier kein Reibungskontakt bestehen muss.

Die Kopplungseinheiten 46 bzw. die Blattfedern 48 derselben können in Umfangsrichtung gekrümmt verlaufen, also dem Außenumfang des Kraftspeichers 54 folgen und diesen somit auch zur Kopplung mit der Anpressplatte 30 axial übergreifen. In demjenigen Bereich, in welchem die Kopplungseinheiten 46 bzw. auch die Kopplungsvorsprünge 44 der Anpressplatte 30 liegen, weist der Wandungsbereich 20 Aussparungen 68 auf, die zum axial freien Ende des Wandungsbereichs 20 auch offen sind.

Durch die vorangehend beschriebene Ausgestaltung der Reibungskupplung 10 wird es möglich, die Kopplungseinheiten 46 weit nach radial außen zu verlagern, so dass sie sich im Wesentlichen auch im radialen Erstreckungsbereich des Wandungsbereichs 20 erstrecken. Dementsprechend kann auch der Kraftspeicher 54 radial sehr groß gebaut werden. Ein gegenseitiges Stören mit den Kopplungseinheiten 46 kann gleichwohl vermieden werden. Dieser Effekt kann dadurch noch stärker hervorgebracht werden, dass die Anlageflächenbereiche 64 an dem beispielsweise aus Blechmaterial aufgebauten und durch Prägung und Tiefziehen in die gewünschte Form gebrachten Gehäuse 22 nicht an der der Stirnseite 26 zugewandten Seite des Gehäuses 22 vorgesehen sind, sondern an der davon abgewandten Seite, also an der Außenseite des Gehäuses 22.

Wie man insbesondere in den Fig. 5 und 6 erkennt, weist das grundsätzlich flach, also im Wesentlichen scheibenartig ausgebildete Gehäuse 22 an mehreren Umfangspositionen axial abgebogene und den Wandungsbereich 20 des Schwungrads 12 radial außen in axialer Richtung übergreifende Zentrierabschnitte 70 auf. In Zuordnung zu diesen Zentrierabschnitten 70 ist der Wandungsbereich 20 radial außen mit einem Rücksprung 72 ausgebildet, welcher beispielsweise in radialer Richtung so tief ist, dass die Zentrierabschnitte 70 in radialer Richtung vollständig in diesem Rücksprung 72 aufgenommen werden können, also nicht über die ansonsten vorhandene Außenumfangsfläche 74 des Wandungsbereichs 20 hervorstehen. Dies ist daher von Bedeutung, da derartige Reibungskupplungen 10 allgemein in radial äußerst begrenzten Bauräumen unterzubringen sind und somit ein über die Außenumfangsfläche 74 hervorstehender Bereich des Gehäuses 22 vermieden werden kann.

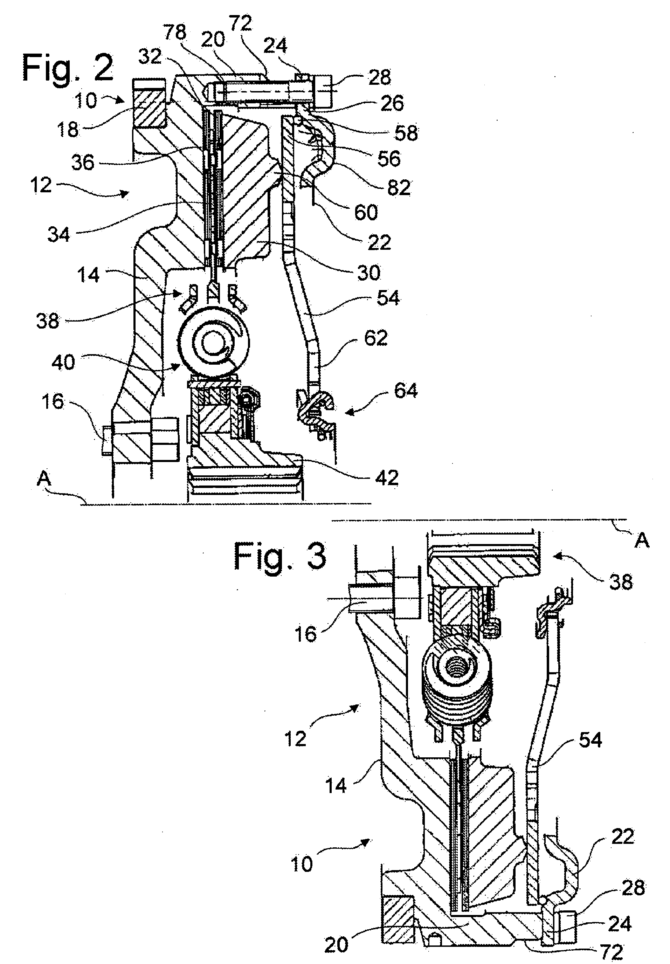

Ferner erkennt man beispielsweise in den Fig. 2 und 6, dass dort, wo die Schraubbolzen 28 das Gehäuse 22 am Schwungrad 12 festlegen, der Wandungsbereich 22 mit axial offenen Aussparungen 76 ausgebildet ist. Diese erstrecken sich in demjenigen axialen Bereich des Wandungsbereichs 22, in welchem auch der Rücksprung 72 gebildet ist. In diesem Bereich verlaufen dann die Schraubbolzen 28 außerhalb des Materials des Schwungrads 12. Erst in dem dann axial folgenden Bereich sind im Wandungsbereich 20 bzw. im Bodenbereich 14 Gewindebohrungen 78 gebildet, in welche die Schraubbolzen 28 eingeschraubt sind. Der Grund für das Vorsehen dieser Aussparungen 76 liegt darin, dass, wie die Fig. 2 dies deutlich zeigt, dort wo der Rücksprung 72 gebildet ist, der Wandungsbereich 20 mit deutlich verminderter Materialsträrke gebildet ist und beim Einbringen von Gewindebohrungen bzw. Schraubbolzen die Gefahr des Ausbrechens besteht.

In der Fig. 1 erkennt man, dass die Schraubbolzen 28, durch welche das Gehäuse 22 am Schwungrad 12 festgelegt ist, jeweils in Dreiergruppen in Umfangsrichtung näher beieinander liegend vorgesehen sind, wobei beispielsweise vier derartige Dreiergruppen gleichmäßig über den Umfang verteilt vorgesehen sein können. Auf diese Art und Weise wird jeweils zwischen zwei derartigen Dreiergruppen ausreichend Umfangsraum erhalten, in welchem dann jeweils eine Kopplungseinheit 46 vorgesehen sein kann. In Zuordnung zu jeder dieser Gruppen von Schraubbolzen 28 ist ein Unterlegeelement 80 vorgesehen. Dieses ist der Außenumfangskontur des radial äußeren Bereichs 24 des Gehäuses 22 angepasst gekrümmt ausgebildet und liegt zwischen den Köpfen der Schraubbolzen 28 und dem radial äußeren Bereich 24 des Gehäuses 22. D.h., die Köpfe der Schraubbolzen 28 beaufschlagen das Gehäuse 22 über diese Unterlegeelemente 80. Da das Gehäuse 22 aus im Allgemeinen vergleichsweise leicht verformbarem Blechmaterial hergestellt werden soll, werden auf diese Art und Weise verschiedene Vorteile kombiniert. Einerseits besteht nicht die Gefahr, dass beim festen Anziehen der Schraubbolzen 28 deren Köpfe sich in das Material des Gehäuses 22 einprägen und somit undefinierte Befestigungszustände entstehen. Hierzu ist es insbesondere vorteilhaft, die Unterlegeelemente 80 aus einem Material herzustellen, das eine größere Materialhärte aufweist, als das Material des Gehäuses 22, also beispielsweise aus gehärtetem Stahlblech oder dergleichen.

Ein weiterer so eingeführter Vorteil ist, dass das Gehäuse 22 dort, wo die Schraubbolzen 28 eingebracht werden und mithin im Wandungsbereich 20 die Aussparungen 76 vorhanden sind, axial nicht gestützt wäre und beim Anziehen der Schraubbolzen 28 die Gefahr bestünde, dass das Gehäuse axial in die Aussparungen 76 hineingezogen wird und sich dabei undefiniert verformt. Durch die vermittels der Unterlegeelemente 80 eingeführte Verstärkung wird jedoch auch dieser Effekt vermieden. Um insbesondere in diesen Bereich die Stabilität des Gehäuses 22 noch zu erhöhen, kann dieses in Zuordnung zu einem oder mehreren der Schraubbolzen 28 im jeweiligen Umfangsbereich mit einer axialen Ausformung 82 versehen sein, so dass durch den hierzu erforderlichen Umformungsvorgang eine erhöhte Steifigkeit des Gehäuses 22 erzielt wird.

Durch das Bereitstellen von Unterlegeelementen 80 jeweils für mehrere Befestigungsbolzen 28 wird auf Grund der besseren Flächenbelastung eine gleichmäßigere Belastung des Gehäuses 22 erzielt. Dazu trägt insbesondere auch bei, dass die Unterlegeelemente 80 sich in Umfangsrichtung über die Köpfe der Schraubbolzen 28 hinaus erstrecken.

Die Unterlageelemente 80 können selbstverständlich in Radialrichtung nach innen über die Köpfe der Schraubbolzen 28 vorstehen, um die Flächenpressung noch weiter zu vermindern.

Es ist selbstverständlich, dass diese Unterlegeelemente 80 nicht notwendigerweise so gebildet sein müssen, dass sie in Zuordnung jeweils zu einer Gruppe von Schraubbolzen 28 vorgesehen sind. Es kann für jeden Schraubbolzen 28 auch ein separates Unterlegeelement vorgesehen sein. Auch die radiale Dimensionierung so, dass sie im Wesentlichen exakt derjenigen der Schraubköpfe entspricht, ist auf Grund der radialen Bauraum sparenden Ausgestaltung vorteilhaft. Bei einer alternativen Variante könnte auf die Unterlegeelemente 80 verzichtet werden und das Material des Gehäuses 22 dort, wo es durch die Schraubbolzen 28 direkt beaufschlagt wird, durch Induktivhärten oder in sonstiger Weise härter gemacht werden, als in den sonstigen Bereichen.

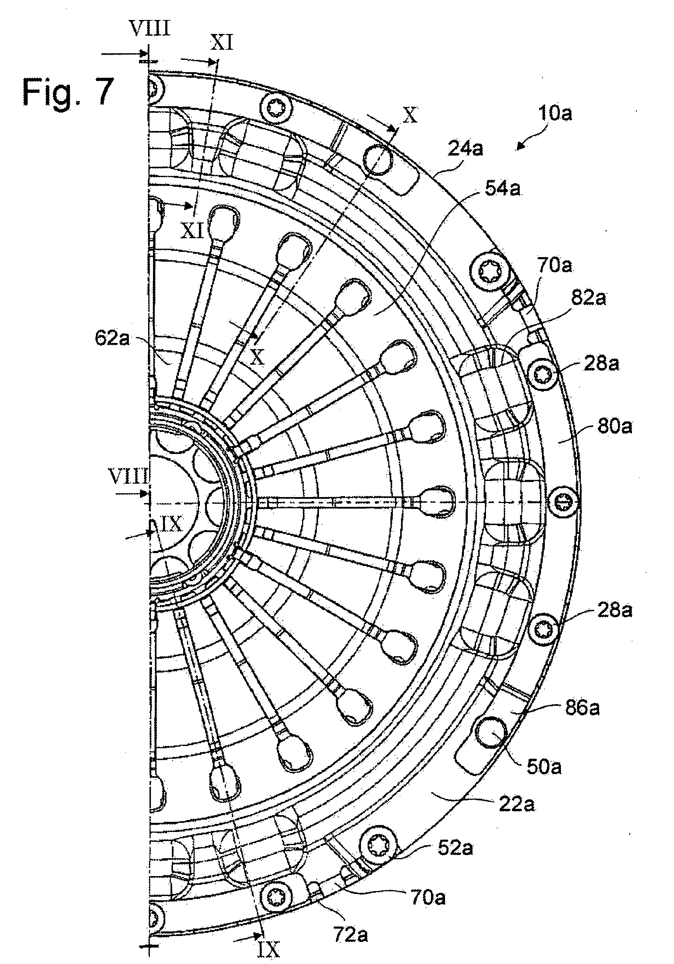

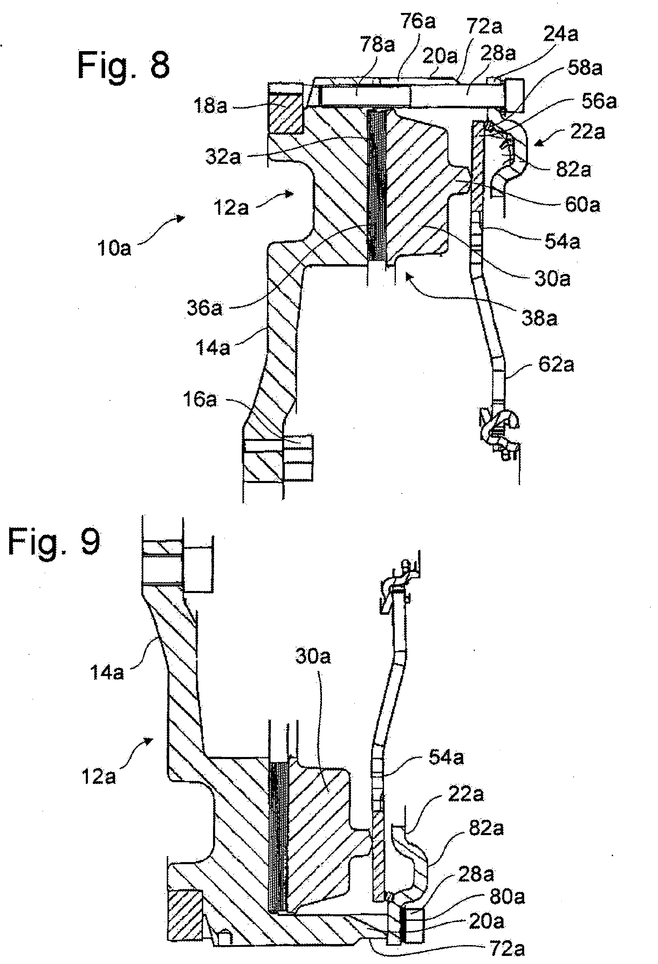

Die Fig. 7 bis 11 zeigen eine alternative Ausgestaltungsform der erfindungsgemäß aufgebauten Reibungskupplung. Komponenten, welche vorangehend beschriebenen Komponenten hinsichtlich Aufbau bzw. Funktion entsprechen, sind mit dem gleichen Bezugszeichen unter Hinzufügung des Anhangs "a" bezeichnet. In wesentlichen Bereichen besteht hier Übereinstimmung im Aufbau, insbesondere hinsichtlich der Ausgestaltung des Gehäuses und des Schwungrades, so dass auf die voranstehenden Ausführungen verwiesen werden kann.

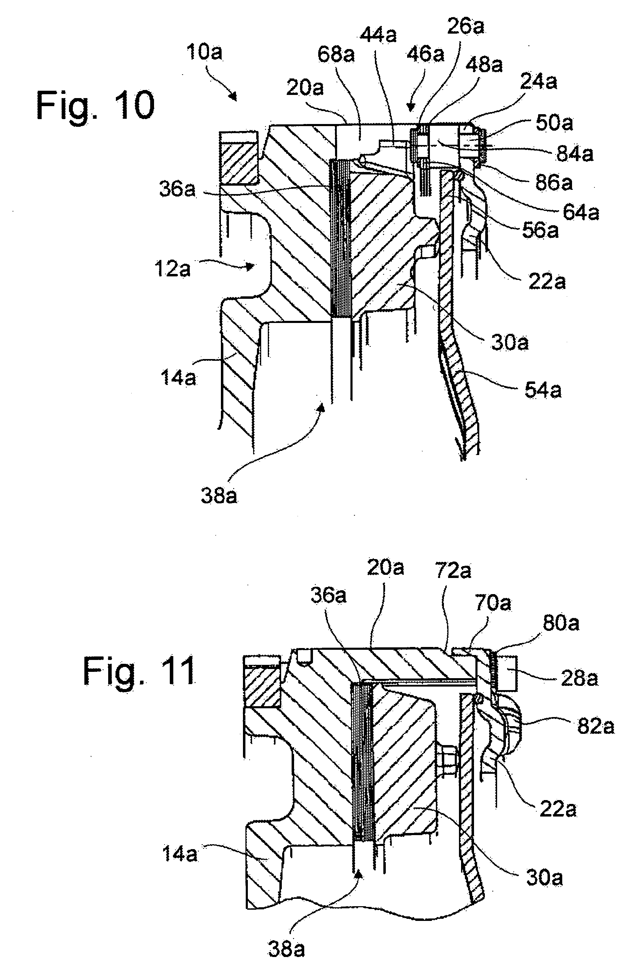

Bei dieser Ausgestaltungsform sind die Kopplungseinheiten 46a bzw. die hier in Dreierstapeln vorgesehenen Blattfedern 48a in ihren bezüglich des Gehäuses 22a festgelegten Endbereichen nicht in direktem, körperlichem Kontakt mit dem Gehäuse 22a. Es sind beispielsweise scheibenartige oder mit den Nietbolzen 50a integral ausgebildete Abstandselemente 84a vorgesehen, welche zwischen den radial äußeren Bereichen 24a des Gehäuses 22a und den Kopplungseinheiten 46a liegen und nunmehr die Anlageflächenbereiche 64a für diese bereitstellen. Diese Anlagebereiche 64a liegen somit ebenfalls nicht in axialer Überlappung mit dem radial äußeren Bereich 56a des Kraftspeichers 54a, sondern auf der der Stirnseite 26a des Wandungsbereichs 20a zugewandten Seite. Auch auf diese Art und Weise wird ein gegenseitiges Stören der Kopplungseinheiten 46a mit dem Kraftspeicher 54a bei gleichwohl sehr großer radialer Bauweise desselben vermieden. Die Abstandselemente 84a liegen, wie man in Fig. 10 erkennt, in geringem radialem Abstand zum radial äußeren Bereich 56a des Kraftspeichers 54a und stellen somit wieder eine Zentrierformation für diesen bereit.

Weiter erkennt man beispielsweise in Fig. 7, dass die Unterlegeelemente 80a in Umfangsrichtung sich jeweils bis in denjenigen Bereich erstrecken, in welchem auch jeweils eine Kopplungseinheit liegt und dort mit einem Verbindungsabschnitt 86a am Gehäuse 22a festgelegt sind. Diese Festlegung kann vorzugsweise mittels der Nietbolzen 50a erfolgen, mit welchen auch die Kopplungseinheiten 46a bezüglich des Gehäuses 22a festgelegt sind. Es sei hier darauf hingewiesen, dass dies selbstverständlich auch bei der vorangehend beschriebenen Ausgestaltungsform so sein kann, Die Festlegung der Unterlageelemente 80a bezüglich des Gehäuses 22a kann selbstverständlich auch in anderer Art und Weise beispielsweise durch Verklebung oder durch Einsatz separat hierfür vorgesehener Befestigungsbolzen oder dergleichen erfolgen.

## Patentansprüche

1. Reibungskupplung, insbesondere für den Antriebsstrang eines Fahrzeugs, umfassend:
- eine mit einem Antriebsorgan zur gemeinsamen Drehung um eine Drehachse (A) zu koppelnde Schwungmasse (12; 12a), welche eine erste Reibfläche bereitstellt,
- ein Gehäuse (22; 22a), welches in seinem radial äußeren Bereich (24; 24a) an der Schwungsmasse (12; 12a) festgelegt ist,
- eine Anpressplatte (30; 30a), welche eine zweite Reibfläche (32;32a) bereitstellt und vermittels einer Mehrzahl von Kopplungseinheiten (46; 46a) mit dem Gehäuse (22; 22a) zur gemeinsamen Drehung um die Drehachse (A) und bezüglich des Gehäuses (22; 22a) axial bewegbar gekoppelt ist,
- eine Kraftbeaufschlagungsanordnung (54; 54a), welche bezüglich des scheibenartigen Gehäuses (22; 22a) und der Anpressplatte (30; 30a) abgestüzt ist zur Beaufschlagung der Anpressplatte (30; 30a) in Richtung auf die Schwungmasse (12; 12a) zu,
wobei das Gehäuse (22; 22a) durch eine Mehrzahl von in die Schwungmasse (12; 12a) eingreifenden Befestigungsbolzen (28; 28a) an dieser festgelegt ist **dadurch gekennzeichnet, dass** an einer von der Schwungmasse (12; 12a) abgewandten Seite des Gehäuses (22; 22a) dort, wo Befestigungsbolzen (28; 28a) vorgesehen sind, eine größere Materialhärte für die Beaufschlagung durch die Befestigungsbolzen (28; 28a) bereitgestellt ist, als in anderen Bereichen des Gehäuses (22; 22a).

2. Reibungskupplung nach Anspruch 1,
**dadurch gekennzeichnet, dass** das Gehäuse (22; 22a) dort, wo die Befestigungsbolzen (28; 28a) dieses beaufschlagen, mit größerer Materialhärte ausgebildet ist, als in anderen Bereichen.

3. Reibungskupplung nach Anspruch 1,
**dadurch gekennzeichnet, dass** in Zuordnung zu den Befestigungsbolzen (28; 28a) Unterlegeelemente (80; 80a) vorgesehen sind, die bezüglich des Materials des Gehäuses (22; 22a) eine größere Materialhärte aufweisen.

4. Reibungskupplung nach Anspruch 3,
**dadurch gekennzeichnet, dass** die Unterlegeelemente (80; 80a) an dem Gehäuse (22; 22a) durch Befestigungselemente (50; 50a) festgelegt sind, vermittels welchen die Kopplungseinheiten (46; 46a) bezüglich des Gehäuses (22; 22a) festgelegt sind.

5. Reibungskupplung nach Anspruch 3 oder 4,
**dadurch gekennzeichnet, dass** in Zuordnung zu mehreren Befestigungsbolzen (28; 28a) ein Unterlegeelement (80; 80a) vorgesehen ist.

6. Reibungskupplung nach einem der Ansprüche 3 bis 5,
**dadurch gekennzeichnet, dass** die Unterlegeelemente (80; 80a) nach radial außen nicht über die Befestigungsbolzen (28; 28a) hervorstehen.

7. Reibungskupplung nach einem der Ansprüche 1 bis 6,
**dadurch gekennzeichnet, dass** die Kopplungseinheiten (46; 46a) wenigstens eine Blattfeder (48; 48a) umfassen.

8. Reibungskupplung nach einem der Ansprüche 1 bis 7,
**dadurch gekennzeichnet, dass** die Kraftbeaufschlagungsanordnung (54; 54a) eine Membranfeder umfasst.

9. Reibungskupplung nach einem der Ansprüche 1 bis 8,
**dadurch gekennzeichnet, dass** die Kraftbeaufschlagungsanordnung (54; 54a) in ihrem radial äußeren Bereich (56; 56a) bezüglich des Gehäuses (22; 22a) und radial weiter innen bezüglich der Anpressplatte (30; 30a) abgestützt ist.

10. Reibungskupplung nach einem der Ansprüche 1 bis 9,
**dadurch gekennzeichnet, dass** die Schwungmasse (12; 12a) im Wesentlichen topfartig ausgebildet ist mit einem die erste Reibfläche (34; 34a) bereitstellenden Bodenbereich (14; 14a) und einem radial außen vom Bodenbereich (14; 14a) im Wesentlichen axial sich erstreckenden Wandungsbereich (20; 20a), wobei das Gehäuse (22; 22a) scheibenartig ausgebildet ist und bezüglich einer Stirnseite des Wandungsbereichs (20; 20a) abgestützt und daran festgelegt ist.

11. Reibungskupplung nach Anspruch 10,
**dadurch gekennzeichnet, dass** im Wandungsbereich (20; 20a) Aussparungen (68; 68a) für die Kopplungseinheiten (46; 46a) ausgebildet sind.

12. Reibungskupplung nach Anspruch 10 oder 11,
**dadurch gekennzeichnet, dass** der Wandungsbereich (20; 20a) dort, wo Befestigungsbolzen (28; 28a) vorgesehen sind, axial offene Aussparungen (76; 76a) aufweist.

13. Reibungskupplung nach Anspruch 3 und Anspruch 11 oder 12,
**dadurch gekennzeichnet, dass** wenigstens ein Unterlegeelement (80; 80a) wenigstens eine Aussparung (68, 76; 68a, 76a) in Umfangsrichtung überbrückt.

## Claims

1. Friction clutch, in particular for the drivetrain of a vehicle, comprising:
- a centrifugal mass (12; 12a) for coupling to a drive element for common rotation about an axis of rotation (A), which centrifugal mass provides a first friction surface,
- a housing (22; 22a) which, in its radially outer region (24; 24a), is fixed to the centrifugal mass (12; 12a),
- a pressure plate (30; 30a) which provides a second friction surface (32;32a) and which, by means of a multiplicity of coupling units (46; 46a), is coupled to the housing (22; 22a) for common rotation about the axis of rotation (A) and so as to be axially movable with respect to the housing (22; 22a),
- a force-exerting arrangement (54; 54a) which is supported with respect to the disc-shaped housing (22; 22a) and the pressure plate (30; 30a) in order to load the pressure plate (30; 30a) in the direction of the centrifugal mass (12; 12a),
with the housing (22; 22a) being fixed to the centrifugal mass (12; 12a) by means of a multiplicity of fastening bolts (28; 28a) which engage into said centrifugal mass, **characterized in that**, on a side of the housing (22; 22a) facing away from the centrifugal mass (12; 12a), where fastening bolts (28; 28a) are provided, a greater material hardness is provided for the loading by the fastening bolts (28; 28a) than is provided in other regions of the housing (22; 22a).

2. Friction clutch according to Claim 1, **characterized in that** the housing (22; 22a) is formed with a greater material hardness where the fastening bolts (28; 28a) act on it than in other regions.

3. Friction clutch according to Claim 1, **characterized in that** shim elements (80; 80a) are provided so as to be assigned to the fastening bolts (28; 28a), which shim elements (80; 80a) have a greater material hardness than the material of the housing (22; 22a).

4. Friction clutch according to Claim 3, **characterized in that** the shim elements (80; 80a) are fixed to the housing (22; 22a) by fastening elements (50; 50a), by means of which the coupling units (46; 46a) are fixed with respect to the housing (22; 22a).

5. Friction clutch according to Claim 3 or 4, **characterized in that** one shim element (80; 80a) is provided so as to be assigned to a plurality of fastening bolts (28; 28a).

6. Friction clutch according to one of Claims 3 to 5, **characterized in that** the shim elements (80; 80a) do not project beyond the fastening bolts (28; 28a) in the radially outward direction.

7. Friction clutch according to one of Claims 1 to 6, **characterized in that** the coupling units (46; 46a) comprise at least one leaf spring (48; 48a).

8. Friction clutch according to one of Claims 1 to 7, **characterized in that** the force-exerting arrangement (54; 54a) comprises a diaphragm spring.

9. Friction clutch according to one of Claims 1 to 8, **characterized in that** the force-exerting arrangement (54; 54a) is supported, in its radially outer region (56; 56a), with respect to the housing (22; 22a) and, radially further inwards, with respect to the pressure plate (30; 30a) .

10. Friction clutch according to one of Claims 1 to 9, **characterized in that** the centrifugal mass (12; 12a) is of substantially pot-shaped design having a base region (14; 14a), which provides the first friction surface (34; 34a), and having a substantially axially extending wall region (20; 20a) radially outside the base region (14; 14a), with the housing (22; 22a) being of disc-shaped design and being supported with respect to and fixed to an end side of the wall region (20; 20a).

11. Friction clutch according to Claim 10, **characterized in that** cutouts (68; 68a) for the coupling units (46; 46a) are formed in the wall region (20; 20a).

12. Friction clutch according to Claim 10 or 11, **characterized in that** the wall region (20; 20a) has axially open cutouts (76; 76a) where fastening bolts (28; 28a) are provided.

13. Friction clutch according to Claim 3 and Claim 11 or 12,
**characterized in that** at least one shim element (80; 80a) bridges at least one cutout (68, 76; 68a, 76a) in the circumferential direction.

## Revendications

1. Embrayage à friction, notamment pour la chaîne cinématique d'un véhicule, comprenant :
- une masse d'inertie (12 ; 12a) à accoupler à un organe d'entraînement en vue d'une rotation commune autour d'un axe de rotation (A), qui fournit une première surface de friction,
- un boîtier (22 ; 22a), qui est fixé dans sa région radialement extérieure (24 ; 24a) à la masse d'inertie (12 ; 12a),
- une plaque de pression (30 ; 30a) qui fournit une deuxième surface de friction (32 ; 32a) et par le biais d'une pluralité d'unités d'accouplement (46 ; 46a), est accouplée au boîtier (22 ; 22a) en vue d'une rotation commune autour de l'axe de rotation (A) et de manière déplaçable axialement par rapport au boîtier (22 ; 22a),
- un agencement de sollicitation par force (54 ; 54a), qui est supporté par rapport au boîtier (22 ; 22a) en forme de disque et par rapport à la plaque de pression (30 ; 30a), en vue de la sollicitation de la plaque de pression (30 ; 30a) dans la direction de la masse d'inertie (12 ; 12a),
le boîtier (22 ; 22a) étant fixé par une pluralité de boulons de fixation (28 ; 28a) s'engageant dans la masse d'inertie (12 ; 12a) sur cette dernière, **caractérisé en ce que** sur un côté du boîtier (22 ; 22a) opposé à la masse d'inertie (12 ; 12a), où des boulons de fixation (28 ; 28a) sont prévus, une plus grande dureté de matériau que dans les autres régions du boîtier (22 ; 22a) est prévue en vue de la sollicitation par les boulons de fixation (28 ; 28a).

2. Embrayage à friction selon la revendication 1, **caractérisé en ce que** le boîtier (22 ; 22a), est réalisé avec une dureté de matériau là où les boulons de fixation (28 ; 28a) sollicitent ce dernier, plus grande que dans les autres régions.

3. Embrayage à friction selon la revendication 1, **caractérisé en ce que** des éléments sous-jacents (80 ; 80a) sont prévus en association avec les boulons de fixation (28 ; 28a), lesquels présentent par rapport au matériau du boîtier (22 ; 22a) une plus grande dureté de matériau.

4. Embrayage à friction selon la revendication 3, **caractérisé en ce que** les éléments sous-jacents (80 ; 80a) sont fixés au boîtier (22 ; 22a) par des éléments de fixation (50 ; 50a), au moyen desquels les unités d'accouplement (46 ; 46a) sont fixées par rapport au boîtier (22 ; 22a).

5. Embrayage à friction selon la revendication 3 ou 4,
**caractérisé en ce qu'**un élément sous-jacent (80 ; 80a) est prévu en association avec plusieurs boulons de fixation (28 ; 28a).

6. Embrayage à friction selon l'une quelconque des revendications 3 à 5,
**caractérisé en ce que** les éléments sous-jacents (80 ; 80a) ne dépassent pas radialement vers l'extérieur au-delà des boulons de fixation (28 ; 28a).

7. Embrayage à friction selon l'une quelconque des revendications 1 à 6,
**caractérisé en ce que** les unités d'accouplement (46 ; 46a) comprennent au moins un ressort à lame (48 ; 48a).

8. Embrayage à friction selon l'une quelconque des revendications 1 à 7,
**caractérisé en ce que** l'agencement de sollicitation par force (54 ; 54a) comprend un ressort à membrane.

9. Embrayage à friction selon l'une quelconque des revendications 1 à 8,
**caractérisé en ce que** l'agencement de sollicitation par force (54 ; 54a) est supporté dans sa région radialement extérieure (56 ; 56a) par rapport au boîtier (22 ; 22a) et radialement davantage vers l'intérieur par rapport à la plaque de pression (30 ; 30a).

10. Embrayage à friction selon l'une quelconque des revendications 1 à 9,
**caractérisé en ce que** la masse d'inertie (12 ; 12a) est réalisée essentiellement en forme de pot avec une région de fond (14 ; 14a) fournissant la première surface de friction (34 ; 34a) et une région de paroi (20 ; 20a) s'étendant essentiellement axialement radialement à l'extérieur de la région de fond (14 ; 14a), le boîtier (22 ; 22a) étant réalisé en forme de disque et étant supporté par le biais d'un côté frontal de la région de paroi (20 ; 20a) et fixé à celui-ci.

11. Embrayage à friction selon la revendication 10, **caractérisé en ce que** des évidements (68 ; 68a) pour les unités d'accouplement (46 ; 46a) sont réalisés dans la région de paroi (20 ; 20a).

12. Embrayage à friction selon la revendication 10 ou 11,
**caractérisé en ce que** la région de paroi (20 ; 20a) présente des évidements (76 ; 76a) ouverts axialement là où des boulons de fixation (28 ; 28a) sont prévus.

13. Embrayage à friction selon la revendication 3 et selon les revendications 11 ou 12,
**caractérisé en ce qu'**au moins un élément sous-jacent (80 ; 80a) surmonte au moins un évidement (68, 76 ; 68a, 76a) dans la direction périphérique.
